# EUROPEAN PATENT APPLICATION

(11) **EP 4 765 532 A1**
(43) Date of publication of application: **24.06.2026**
(21) Application number: 24221331.2
(22) Date of filing: 19.12.2024
(51) Int. Cl.: H02G 11/02, B60L 9/00, B65H 75/42, B65H 51/10

(54) **CABLE GUIDING DEVICE, MINING VEHICLE, AND METHOD**

(71) Applicant: Sandvik Mining and Construction Oy, 33330 Tampere (FI)
(72) Inventor: Verho, Samuli, 33330 Tampere (FI); Vatanen, Harri, 33330 Tampere (FI); Leivo, Kalle, 33330 Tampere (FI)
(74) Representative: Sandvik

(57) **Abstract**

A cable guiding device, a mining vehicle, and a method of guiding a trailing electric cable of an electrically powered mining vehicle. A cable guiding device (17) is for guiding a trailing electric cable (14) of an electrically powered mining vehicle (1). The cable guiding device (17) comprises a cable guiding tail (18) which has an elongated arm configuration mountable to the electrically powered mining vehicle (1). The cable guiding device further comprises a cable guiding assembly (19) mounted to the cable guiding tail (18) and comprising guide rollers (28) for guiding the trailing electric cable (14). The cable guiding device further comprises a force assembly (100), being coupled to the cable guiding assembly (19) and/or the cable guiding tail (18), and configured to pull the trailing electric cable (14) out from the cable reel assembly (16) by providing a force to a portion of the trailing electric cable (14) that is unwound from the cable reel assembly.

## Description

### Background of the invention

The invention relates to a cable guiding device for guiding a trailing electric cable of an electrically powered mining vehicle.

The invention further relates to a mining vehicle, and to a method of guiding a trailing electric cable of an electrically powered mining vehicle.

The field of the invention is defined more specifically in the preambles of the independent claims.

In mines and other work sites, various mining vehicles, i.e. mobile mining machines, are used. Examples of mining vehicles include, but are not limited to, drill rigs, loaders, wheel loaders, dumpers, excavators, bulldozers, rock removal machines, service vehicles, or the like. The mining vehicles may be electrically operated and may be connected to an external electric source by means of an electric cable for providing needed electrical energy. The electric cable is typically controlled by means of a cable handling system comprising a cable reel assembly mounted on a rear part of the mining vehicle and allowing the cable to be unwound and wound on the cable reel assembly in accordance with movements of the mining vehicle. The rear part of the mining vehicle also comprises a cable guiding device for guiding the electric cable. However, the known cable guiding devices have shown to have some disadvantages in their structures and also in capabilities to provide proper guidance for the electric cable in different movement situations.

### Brief description of the invention

An object of the invention is to provide a novel and improved cable guiding device. Another object of the invention is to provide a novel and improved mining vehicle equipped with such cable guiding device. Another object of the invention is to provide a novel and improved method for guiding a trailing electric cable.

The invention is characterized by the features of the independent claims.

Some embodiments of the invention are disclosed in the dependent claims.

An idea of the disclosed solution is that a cable guiding device is for guiding a trailing electric cable of an electrically powered mining vehicle, which electrically powered mining vehicle comprises a cable reel assembly for reeling in and/or out the trailing electric cable. The cable guiding device comprises a cable guiding tail which has an elongated arm configuration mountable to the electrically powered mining vehicle. The cable guiding device further comprises a cable guiding assembly mounted to the cable guiding tail and comprising guide rollers for guiding the trailing electric cable. The cable guiding device further comprises a force assembly, being coupled to the cable guiding assembly and/or the cable guiding tail, and configured to pull the trailing electric cable out from the cable reel assembly by providing a force to a portion of the trailing electric cable that is unwound from the cable reel assembly.

An advantage herein is that the trailing electric cable stays tight between the cable reel assembly and the force assembly. In other words, the force assembly prevents the electric cable to get tangled up between the force assembly and the reel assembly. Another advantage herein is that the trailing electric cable can stay on the ground as the mining vehicle drives on the predetermined route. Another advantage herein is that the trailing electric cable can follow the same path as the mining vehicle drives. The force assembly provides the force to the trailing electric cable, ensuring that the electric cable remains on the ground even if the mining vehicle drives a slalom route.

According to an embodiment, the cable guiding device, or the force assembly, comprises at least one first rotatable element configured to be in contact to the trailing electric cable. The cable guiding device, or the force assembly, further comprises at least one second rotatable element configured to be in contact to the trailing electric cable, wherein the said at least one first rotatable element and the said at least one second rotatable element are arranged opposing sides of the trailing electric cable. The force assembly comprises a motor coupled to the at least one first rotatable element and/or the at least one second rotatable element, wherein the motor is configured to rotate the first rotatable element and/or the second rotatable element for providing the force to the trailing electric cable. An advantage herein is a simple solution to provide the force for pulling the trailing electric cable out from the reel.

According to an embodiment, the motor of the force assembly is coupled to the at least one first rotatable element. The force assembly further comprises a second motor coupled to the at least one second rotatable element, wherein the second motor is configured to rotate the second rotatable element for providing the force to the trailing electric cable. An advantage herein is that the force can be transmitted more effectively to the trailing electric cable, since the first and the second rotatable element are being rotated.

According to an embodiment, the force assembly further comprises an adjusting mechanism configured to adjust a gap for the trailing electric cable between the at least one first rotatable element and the at least one second rotatable element. An advantage herein is that the friction force can be fine-tuned. Another advantage herein is that the force assembly is suitable for different sized electric cables.

According to an embodiment, the force assembly comprises a control unit for controlling the force provided to the trailing electric cable. An advantage herein is that the route of the electric cable can be fine-tuned since the force can be adjusted based on characteristic of the environment and/or the mining vehicle, such as speed of the mining vehicle, the friction between the cable and the ground, and/or the curve being drive by the mining vehicle, for example.

According to an embodiment, the cable guiding assembly comprises a frame arranged to provide support for the guide rollers. Further, the cable guiding assembly comprises two first side rollers and two second side rollers arranged on opposing sides of the frame, wherein the trailing electric cable is arranged to travel between the two first side rollers and the two second side rollers. Further, cable guiding assembly comprises two down rollers located adjacent lower ends of the first and second side rollers and being orientated in transverse direction in relation to the first and second side rollers.

According to an embodiment, the force assembly comprises a first motor coupled to the at least one first side roller, wherein the first motor is configured to rotate the first side roller for providing the force to the trailing electric cable. Further, the force assembly comprises a second motor coupled to the at least one second side roller, wherein the second motor is configured to rotate the second side roller for providing the force to the trailing electric cable. Further, the force assembly comprises an adjusting mechanism configured to adjust a gap for the trailing electric cable between the at least one first side roller and the at least one second side roller.

According to an embodiment, the cable guiding device further comprises a rotating joint between the cable guiding assembly and the cable guiding tail whereby the cable guiding assembly is turnable in relation to the cable guiding tail.

An idea of the disclosed solution is that a mining vehicle comprises a movable carrier. The mining vehicle further comprises at least one mine work device mounted on the carrier. The mining vehicle further comprises an electrical operating system for powering the mining vehicle. The mining vehicle further comprises a cable reel assembly for reeling in and/or out a trailing electric cable. The mining vehicle further comprises at least one cable guiding device for handling the trailing electric cable.

An advantage herein is that the trailing electric cable can stay on the ground as the mining vehicle drives on the predetermined route. In other words, the trailing electric cable can follow the same path as the mining vehicle drives. The force, i.e., the pulling force, provides the trailing electric cable to stay on the ground even if the mining vehicle drives a slalom route.

According to an embodiment, the cable guiding tail is mounted to an upper part of a rear end part of the mining vehicle and has downwards slanted orientation.

According to an embodiment, the cable reel assembly comprises a reel for storing the trailing electric cable. Further, the cable reel assembly comprises a reel motor coupled to the reel and configured to reel in and/or out the trailing electric cable.

An idea of the disclosed solution relates to a method of guiding a trailing electric cable of an electrically powered mining vehicle that moves on a route, wherein the method comprises guiding the trailing electric cable through the cable guiding device. The method further comprises pulling the trailing electric cable out from the cable reel assembly, wherein the trailing electric cable is pulled out by the force assembly providing a force to the portion of the trailing electric cable that is unwound from the cable reel assembly.

According to an embodiment, the method further comprises controlling speed of the trailing electric cable traveling through the cable guiding device relative to the speed of the trailing electric cable locating on the cable reel assembly, which speed of the trailing electric cable traveling through the cable guiding device is controlled by adjusting the said force provided by the force assembly.

According to an embodiment, the method further comprises controlling speed of the trailing electric cable on the cable reel assembly, which speed of the trailing electric cable is controlled by a reel motor of the reel assembly.

According to an embodiment, the method further comprises allowing the cable guiding assembly to turn in relation to the cable guiding tail in response to movements of the mining vehicle.

### Brief description of the figures

Some embodiments are described in more detail in the accompanying drawings, in which
Figure 1 is a schematic side view of a mining vehicle provided with a cable guiding device,
Figure 2 is a schematic top view of a rear part of a mining vehicle and also shows a cable guide tail in a normal operational position and in a slanted transport position,
Figures 3 - 6 are schematic views of a cable guide assembly and a rotating joint in different view angles,
Figures 7 and 8 are schematic cross-sectional views of the cable guide assembly and the rotating joint shown in Figures 3 - 6,
Figure 9 is a schematic view of a cable guiding device, and
Figures 10 and 11 are schematic views of a cable guid assembly with a force assembly.

For the sake of clarity, the figures show some embodiments of the disclosed solution in a simplified manner. In the figures, like reference numerals identify like elements.

### Detailed description of some embodiments

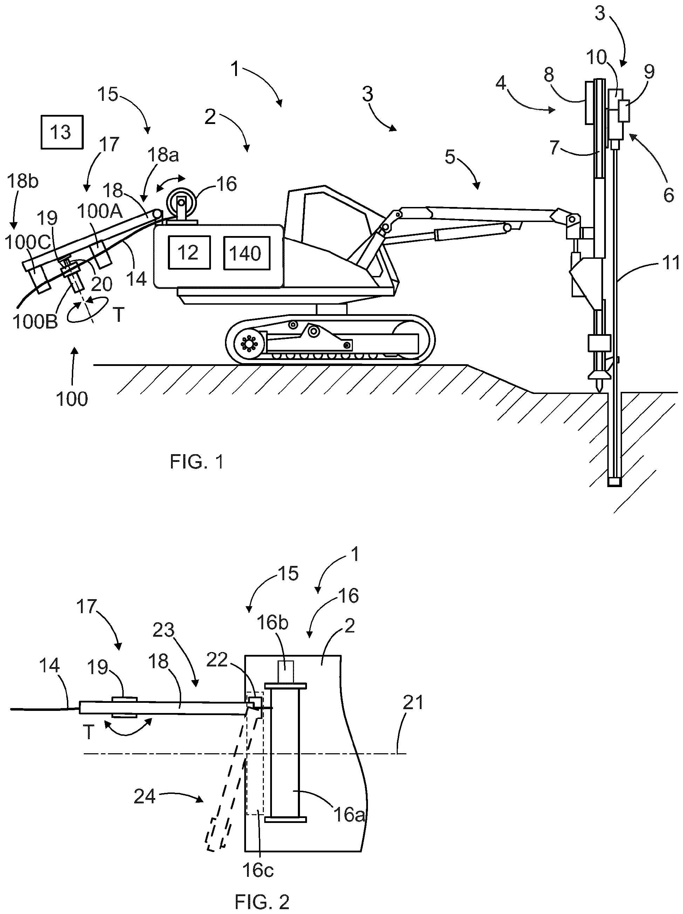

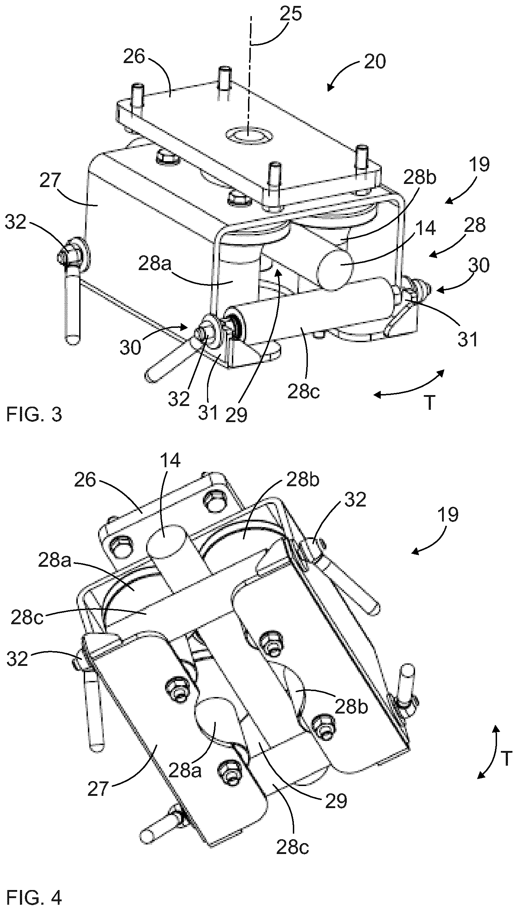

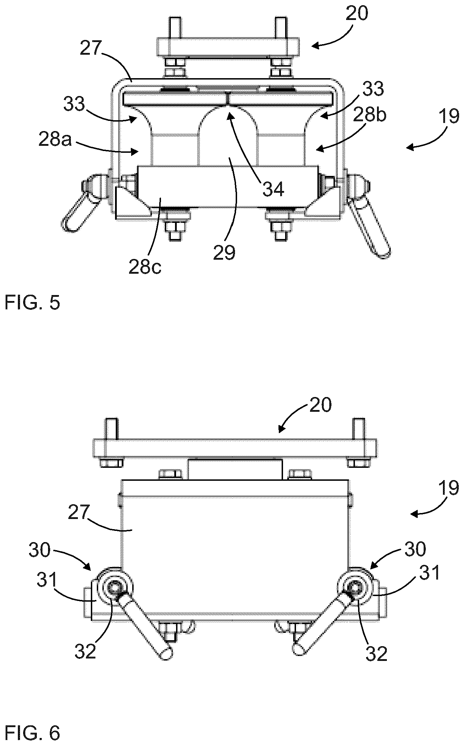

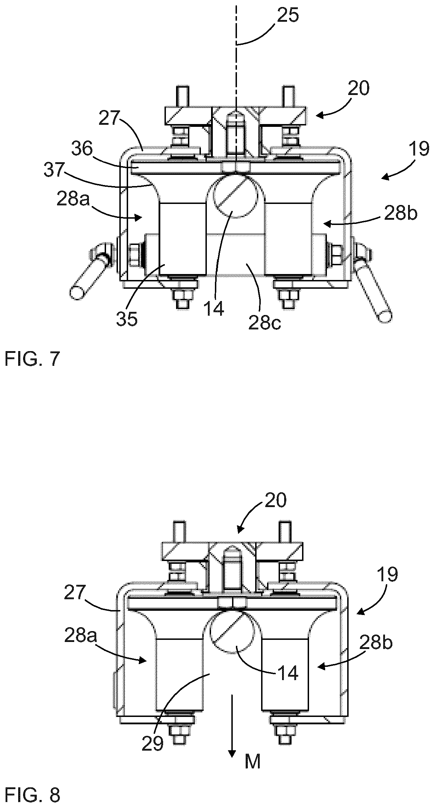

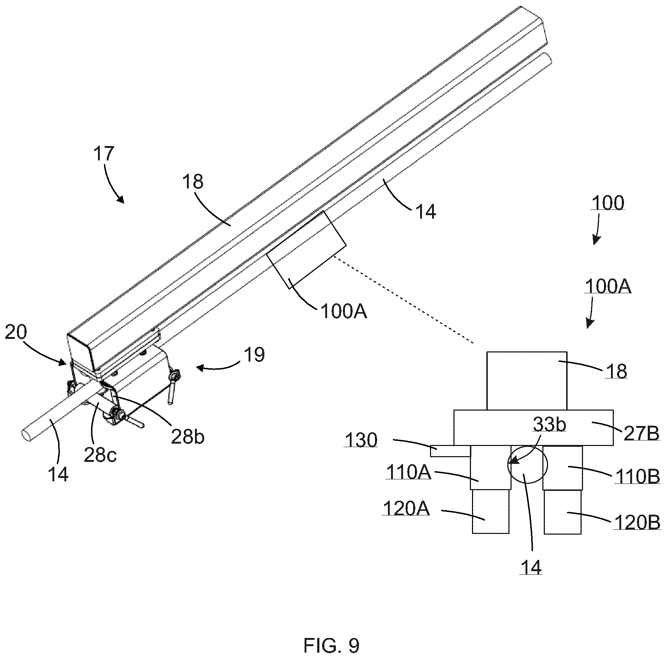

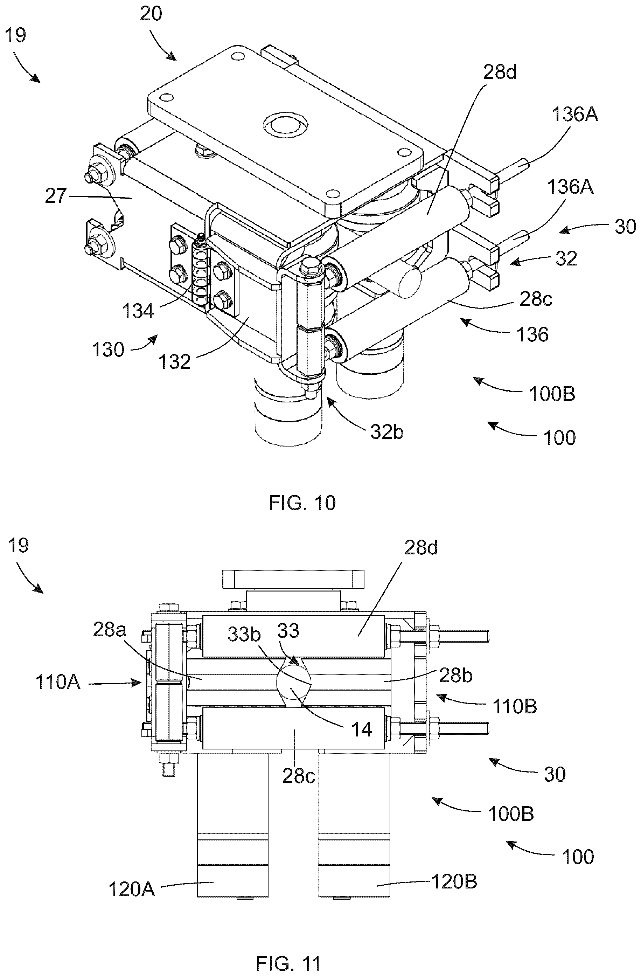

Figure 1 is a schematic side view of a mining vehicle provided with a cable guiding device. Figure 2 is a schematic top view of a rear part of a mining vehicle and also shows a cable guide tail in a normal operational position and in a slanted transport position. Figures 3 - 6 are schematic views of a cable guide assembly and a rotating joint in different view angles. Figures 7 and 8 are schematic cross-sectional views of the cable guide assembly and the rotating joint shown in Figures 3 - 6. Figure 9 is a schematic view of a cable guiding device. Figures 10 and 11 are schematic views of a cable guid assembly with a force assembly.

A mining vehicle 1 shown in the figures 1 and 2 comprises a movable carrier 2. The mining vehicle further comprises at least one mine work device 3 mounted on the carrier 2. The mining vehicle 1 further comprises an electrical operating system 12 for powering the mining vehicle 1. The mining vehicle 1 further comprises a cable reel assembly 16 for reeling in and out a trailing electric cable 14, i.e., the electric cable 14, i.e., the electrical cable 14. Especially the cable reel assembly is used for reeling in the trailing electric cable. The mining vehicle 1 further comprises at least one cable guiding device 17 for handling the trailing electric cable 14. The mining vehicle 1 is disclosed in more detail below.

The cable guiding device 17 of the figures is for guiding a trailing electric cable 14 of an electrically powered mining vehicle 1. The cable guiding device 17 comprises a cable guiding tail 18 which has an elongated arm configuration mountable to the electrically powered mining vehicle 1. The cable guiding device 17 further comprises a cable guiding assembly 19 mounted to the cable guiding tail 18. The cable guiding assembly 19 comprises guide rollers 28 for guiding the trailing electric cable 14. The cable guiding device 17 further comprises a force assembly 100 being coupled to the cable guiding assembly 19 and/or the cable guiding tail 18. The force assembly 100 is for pulling the trailing electric cable 14 out from the cable reel assembly 16. The force assembly 100 is configured to pull the trailing electric cable 14 out from the cable reel assembly 16 by providing a force to a portion of the trailing electric cable 14 that is unwound from the cable reel assembly 16. The direction of the said force is away from the cable reel assembly 16. The cable guiding device 17 comprises one force assembly 100, for example. Alternatively, the cable guiding device 17 comprises a plurality of force assemblies 100, for example.

The cable guiding tail 18 of the figures comprises/is an elongated arm. The elongated arm comprises a first end 18a mounted to the mining vehicle 1 and a distal second end 18b. The cable guiding tail 18 is mounted on a rear end 15 of the mining vehicle 1. The cable guiding tail 18 may have downwards slanted orientation. This is advantageous since the electric cable 14 is lying on a ground and can be smoothly guided therefrom towards the cable reel assembly 16.

The cable guiding tail 18 of the figures may be mounted asymmetrically in relation to central axis 21 of the mining vehicle 1. Then a mounting system 22 of the cable guiding tail 18 may be located at an uneven distance from longitudinal sides of the carrier 2 of the mining vehicle 1. The cable guiding tail 18 has a normal operational position 23, wherein the cable guiding tail 18 is oriented in the longitudinal direction of the mining vehicle 1. During the normal operation there may be no need to turn the cable guiding tail 18 since a cable guiding assembly 19 can turn T and can take care off smooth run of an electric cable 14 towards a cable reel assembly 16. Thus, the cable guiding tail 18 may be immovably fastened or locked when in the normal position 23.

Figures 3-9 show the cable guiding assembly 19 without the force assembly 100. Figure 10 shows the cable guiding assembly 19 with the force assembly 100.

The cable guiding assembly 19 of the figures comprises a frame 27 arranged to provide support for the guide rollers 28. The frame 27 may be a metal plate being cut and bent into the desired shape, for example.

The cable guiding assembly 19 of the figures further comprises two first side rollers 28a and two second side rollers 28b arranged on opposing sides of the frame 27. The trailing electric cable 14 is arranged to travel between the two first side rollers 28a and the two second side rollers 28b.

The first and second side rollers 28a, 28b of the figures are provided with geometrically asymmetrical shapes with enlarged side profiles 33. The enlarged side profiles 33 can serve as guide surfaces for the electric cable in a direction towards the rotating joint 20. The two opposing enlarged side profiles 33 form together a curved guide configuration 34 facing towards an electric cable mountable to the guide opening 29.

Figures 7 and 8 show an example of geometrically asymmetric side profiles of the side rollers 28a, 28b. The side rollers 28a, 28b comprise first cylindrical sections 35 at their second end portions, and second cylindrical sections 36 at their first end portions. The second cylindrical sections 36 have greater diameters compared to the first cylindrical sections 35. Further, between the first and second cylindrical sections 35, 36 there are continuously enlarging sections 37 wherein the outer diameters expand nonlinearly from the first cylindrical sections 35 to the second cylindrical sections 36. Thus, the sections 37 may be curved surfaces which support and guide an electric cable 14 well, as it is shown in Figures 7 and 8. Figures 3-8 show the said profiles 33 at their first end portions being closer to the rotating joint 20 and opposing their second end portions adjacent to the down rollers 28c.

Figures 10 and 11 show the enlarged side profile 33 forming a groove 33b. In other words, the first side roller 28a and/or the second side roller 28b comprises a groove 33b. The groove 33b is configured to extend against the electrical cable. In other words, the groove 33b is configured to receive the electrical cable. When the enlarged side profile is in contact with the electric cable, the enlarged side profile 33 provides the friction between the side rollers and the electric cable. The groove 33b comprises a curved shape. The curved shape may match the shape of the electric cable 14. The groove 33b may prevent the electric cable to move in vertical direction.

The cable guiding assembly 19 of the figures further comprises down rollers 28c located adjacent lower ends of the first and second side rollers 28a, 28b. The down rollers 28c are orientated in transverse direction in relation to the first and second side rollers 28a, 28b. There may be two down rollers, for example. The down rollers may be cylindrical in shape.

The down rollers 28c of the cable guiding assembly 19 of the figures are provided with coupling fastening systems 30. The coupling fastening system 30 may be a quick coupling fastening system 30. The coupling fastening system 30 is used for changing the location of the down roller 28c, when installing the electric cable, for example. As shown in the figure 3, the coupling fastening system 30 may comprise hook-shaped support 31 opening upwards so that when fastening nuts 32 are loosened, the down rollers 28c can be lifted upwards and released from the hook-shaped supports 31, as shown in the figure 3, for example. As shown in the figure 10, the coupling fastening system 30 comprises a hinge 32b around which down roller 28c can be turned when the fastening nut is loosened. The fastening nuts 32 may be wing nuts, or alternatively any other type of fastening elements can be implemented. After the down rollers 28c are removed from the frame 27, the guide opening 29 is open downwards and the electric cable 14 can come out of the cable guide assembly 19. The structure of the frame 27 is open in downward direction as it clearly shown in the figure 4, for example. Fastenings of the down rollers 28c can be opened and the down rollers 28c can be removed. Then the electric cable 14 can be moved M away from the guide space 29. A downwardly open structure of the frame 27 and the removable down rollers 28c make it easy and quick to uncouple the cable 14 from the assembly 19.

The cable guiding assembly 19 of the figures 10 and 11 further comprises upper rollers 28d locating above relative to the said down rollers 28c. The upper rollers 28d are orientated in transverse direction in relation to the first and second side rollers 28a, 28b. There may be two upper rollers, for example. The upper rollers may be cylindrical in shape.

The force assembly 100 of the figures is disclosed in more detailed as follows. The force assembly 100 of the figures is coupled to the cable guiding assembly 19 and/or the cable guiding tail 18. As mentioned above, there is at least one force assembly 100. Thus, there may be one, two or three force assemblies 100, for example. Figure 1 shows three examples for placing the force assembly. Figure 1 shows the force assembly 100A being coupled to the cable guiding tail 18, wherein the said force assembly 100A further locates between the cable guiding assembly 19 and the cable reel assembly 16. Figure 1 shows the force assembly 100B being coupled to the cable guiding assembly 19. Figure 1 shows the force assembly 100C being coupled to the cable guiding tail 18, wherein the said force assembly 100B further locates between the cable guiding assembly 19 and the distal end 18b of the cable guiding tail 18. The said force assembly 100C may be mounted to the said distal end 18b of the cable guiding tail 18.

The force assembly 100 of the figures is configured to pull the trailing electric cable 14 out from the cable reel assembly 16. The said force causes the trailing electric cable 14 to be pulled out from the cable reel assembly 16 in more controlled manner. The force assembly 100 is configured to provide the force to a portion of the trailing electric cable 14. The force is provided to the portion of the trailing electric cable 14 locating essentially parallel relative to the cable guiding tail 18. In other words, the force is provided to the portion of the trailing electric cable 14 locating between the end 18a and the opposite distal end 18b of the cable guiding tail 18.

The force assembly 100 of the figures comprises at least one first rotatable element 110A configured to be in contact to the trailing electric cable 14. The force assembly 100 further comprises at least one second rotatable element 110B configured to be in contact to the trailing electric cable 14. The said at least one first rotatable element 110 and the said at least one second rotatable element 110 are arranged opposing sides of the trailing electric cable 14. The first rotatable element 110A and/or the second rotatable element 110B is configured to be rotated. The first rotatable element and the second rotatable element rotate in opposite directions relative to each other. The said rotatable elements may have a smooth surface, whereby the smooth surface forms the contact to the electric cable 14. Alternatively, the said rotatable elements may be toothed, whereby the tooth forms the contact to the electric cable14. According to an embodiment not shown in the figures, instead of the force assembly 100 comprising the above-mentioned features, the cable guiding device 17 comprises the above-mentioned features.

As shown in the figure 10, the first rotatable element 110A is the first side roller 28a. Further, the second rotatable element 110B is the second side roller 28b.

The force assembly 100 of the figures comprises a motor 120A coupled to the at least one first rotatable element 110A and/or the at least one second rotatable element 110B. The said motor 120A can be called the first motor 120A, if there is a second motor 120B. The motor 120A is configured to rotate the first rotatable element 110A and/or the second rotatable element 110B for providing the force to the trailing electric cable 14. According to a first example, the motor 120A is coupled to the first rotatable element for rotating the first rotatable element, and the second rotatable element is configured to rotate freely. According to a second example, the motor 120A is coupled to the first rotatable element for rotating the first and the second rotatable element, wherein the first and the second rotatable elements are mechanically linked by gears. According to a third example, the first motor 120A is coupled to the first rotatable element for rotating the first rotatable element, and the second motor 120B is coupled to the second rotatable element for rotating the second rotatable element.

The motor 120A of the force assembly 100 of the figures may be an electric motor, or a hydraulic motor, for example. Hydraulic motors may be connected in series, for example. Using hydraulic motors in series provides the motors to be operated in a coordinate manner. The pressure control of the motors makes the speed of motors well adapted to the reel speed without any additional synchronization between the reel and the motors.

The force assembly 100 of the figures comprises two motors as shown in the figures 9, 10 and 11, for example. The motor 120A, i.e., the first motor 120A, of the force assembly 100 is coupled to the at least one first rotatable element 110A. The force assembly 100 further comprises a second motor 120B coupled to the at least one second rotatable element 110B. The second motor 120B is configured to rotate the second rotatable element 110B for providing the force to the trailing electric cable 14.

The force assembly 100 of the figures comprises an adjusting mechanism 130 configured to adjust a gap for the trailing electric cable 14 between the at least one first rotatable element 110A and the at least one second rotatable element 110B. The gap is adjusted by adjusting a distance between the first rotatable element 110A and the second rotatable element 110B. The first rotatable element and/or the second rotatable element are moved relative to each other in order to adjust the said gap. The rotatable element can be moved linearly, or the rotatable element can be moved in an articulated manner, for example.

The adjusting mechanism 130 of the figures comprises an arm 132 being coupled to the first rotatable element 110A. The first rotatable element 110A stays in place relative to the arm 132. The arm 132 is further coupled to a stable structure. In more detail, the arm 132 is coupled to the stable structure in an articulated manner. The arm 132 is configured to turn around the pivot point. The adjusting mechanism comprises a hinge 134 providing the pivot point around which the arm 132 turns. The said stable structure can be the frame 27 of the cable guiding assembly, as shown in the figure 10, for example.

The adjusting mechanism 130 of the figures further comprises a tightening device 136, i.e., a clamping device. The tightening device 136 is configured to temporarily hold the arm 132 in place. The tightening device 136 provides the position of the arm 132 to be locked and unlocked. The tightening device 136 is coupled to the arm 132 in an articulated manner. Further, the tightening device 136 is coupled to the other stable structure, such as to the frame. The tightening device 136 comprises a threaded rod 136A that is coupled to the arm 132 and to the stable structure such as to the frame 27. The threaded rod 136A is coupled to the stable structure with a nut. Figure 10 shows that the down roll and the upper roll are coupled to the threaded rod 136A.

The force assembly 100 of the figures comprises a frame 27B. The frame 27B is coupled to the cable guiding tail 18. The at least one first rotatable element is coupled to the frame 27B. The at least one second rotatable element is coupled to the frame 27B. The adjusting mechanism 130 is coupled to the frame 27B.

The force assembly 100 comprises a control unit 140 for controlling the force provided to the trailing electric cable 14. The control unit 140 is an electronic device that manages and regulates operations of the motor 120, which motor is an electric motor. The control unit controls parameters such as speed, torque, direction, and position by processing inputs received from sensors or user commands. The control unit further sends appropriate signals to the motor. If the motor 120 of the force assembly is a hydraulic motor, the control unit controls the operations such as flow and pressure of the fluid. The control unit control valves and/or pumps, for example.

According to an embodiment not shown in the figures, the force assembly 100 comprises a linear actuator. The linear actuator may be a hydraulic cylinder, for example. An end of the linear actuator may be mounted to the cable guiding tail 18. The force assembly 100 further comprises a gripper configured to form the contact to the electric cable. The gripper is mounted to the end of the hydraulic cylinder. In more detail, the gripper is mounted to the end of the linear actuator to be operated. When the gripper is in contact to the electric cable, and the linear actuator is operated, the electric cable is being pulled out from the reel assembly.

The cable guiding device 17 of the figures comprises a rotating joint 20 between the cable guiding assembly 19 and the cable guiding tail 18 whereby the cable guiding assembly 19 is turnable T in relation to the cable guiding tail 18. Figure 1 shows that there is the rotating joint at the cable guiding assembly 19. Figure 10 shows that there is the rotating joint 20 for the cable guiding assembly 19 provided with the force assembly 100. The rotating joint 20 improves guidance of the electric cable. When used together with force assembly 100A, 100B, the rotating joint 20 improves guidance of the electric cable 14 with respect to force assembly 100A, 100B, which improves operation of force assembly 100A, 100B. In general, the rotating joint 20 enables to provide larger bending radius in horizontal direction with smaller size of the cable guiding assembly 19. This improves durability of the electric cable 14 and enables to avoid misuse of the electric cable 14.

The mining vehicle 1 of the figures 1-2 comprises a movable carrier 2 and one or more mine work devices 3. In this case the mining vehicle 1 is a rock drilling rig for drilling drill holes to a rock surface. The rock drilling rig comprises one or more rock drilling units 4 arranged on one or more drilling booms 5. The drilling unit 4 serves as the mine work device 3 and comprises a rock drilling machine 6 which is movable on a feed beam 7 by means of a feed device 8. In Figure 1 the rock drilling machine 6 is of top hammer type and comprises a rotating device 9 and an impact device 10 for providing a drilling tool 11 with a turning movement and impact pulses. However, the rock drilling machine 6 may alternatively be a rotary drilling machine comprising only a rotating head, or a down-the-hole (DTH) drilling machine comprising a rotating head and an impact device arranged at a distal end portion of a tool 11.

The mining vehicle 1 of the figures 1-2 is electrically operable whereby it has an electrical operating system 12 which is connected to an external electric source 13 by means of a trailing electric cable 14. The electrical operating system 12 may provide needed energy for a hydraulic system, drive motors, electrical motors, electrical devices and other actuators. The external electric source 13 can be an electric power network of a mine or a mobile electric source, for example. At rear part 15 of the mining vehicle 1 there is a cable reel assembly 16 for reeling in and/or out the electrical cable 14 when the mining vehicle 1 moves. There is also a cable guiding device 17 at the rear part 15 for handling the electric cable 14. The cable guiding device 17 comprises a cable guiding tail 18 which is an elongated arm comprising a first end 18a mounted to the mining vehicle 1 and a distal second end 18b. A cable guiding assembly 19 is mounted to the cable guiding tail 18. The cable guiding assembly 19 may be mounted to the second end 18b of the cable guiding tail 18. The cable guiding assembly 19 comprises guide rollers for guiding the electric cable 14. The rotating joint 20 may be coupled between the cable guiding tail 18 and the device located at the said distal end 18b of the cable guiding tail 18. There may be the rotating joint 20 arranged between the cable guiding assembly 19 and the cable guiding tail 18 for making the cable guiding assembly 19 turnable T in relation to the cable guiding tail 18.

Figure 1 further shows that the cable guiding tail 18 mounted on an upper part of a rear end 15 of the mining vehicle 1 may have downwards slanted orientation. This is advantageous since the electric cable 14 is lying on a ground and can be smoothly guided therefrom towards the cable reel assembly 16.

The cable reel assembly 16 of the figures comprises a reel 16a for storing the trailing electric cable 14. The reel comprises a middle section around which the reel rotates. The middle section may be a shaft, for example. The reel further comprises flanges at both ends of the middle section preventing the cable from flipping off. The electric cable is wound around the reel. In more detail, the electric cable is wound around the middle section of the reel.

The cable reel assembly 16 of the figures further comprises a reel motor 16b coupled to the reel 16a. The reel motor 16b is configured to reel in and/or out the trailing electric cable 14. The reel motor 16b may be an electric motor, or a hydraulic motor, for example. The reel motor 16b is typically used for reeling the electric cable around the said reel. There may be a transmission between the reel motor and the reel. The reel motor 16b is configured to slow down the rotation of the reel 16, when the electric cable is being reeled out from the cable reel assembly. In other words, the reel motor 16 is configured to partially prevent the rotation of the reel 16, when the electric cable is being reeled out from the cable reel assembly. An advantage herein is that the electric cable stays tight between the cable reel assembly and the force assembly 100.

The cable reel assembly 16 of the figures further comprises a lateral transfer device 16c for guiding the cable guiding tail 18 in the width direction of the mining vehicle 1. In other words, the lateral transfer device 16c adjusts the distance between the cable guiding tail 18 and the central axis 21 of the mining vehicle 1. The location of the cable guiding tail 18 is adjusted with respect to the location of the electric cable 14 in the cable reel assembly. The lateral transfer device 16c comprises linear guides and a motor being in connection to the linear guides. The cable guiding tail 18 is coupled to the linear guides. The cable guiding tail 18 may be coupled to the linear guides via the mounting system 22.

Let it be mentioned that Figure 1 is only an example of the mining vehicle 1. The same cable guiding device 17 can be implemented in other types of mining vehicles. Examples of other mining vehicles have already been mentioned earlier in this document. Example embodiments of the present disclosure may be however applied to any type of electrically powered vehicles or machines such as working vehicles or working machines. A working machine or working vehicle may be an earthmoving machine or vehicle, such as an excavator, a wheel loader, a bulldozer, or a dumper.

Figure 2 discloses in broken lines that the cable guiding tail 18 can be moved to a transport position 24 wherein it is oriented in transverse direction relative to the central axis 21. In the transport position 24 total length of the mining vehicle 1 is shorter. Since the mounting system 22 is located asymmetrically, the cable guiding tail 18 does not necessarily increase width of the mining vehicle 1 in the transverse direction.

Preparations for the transport position 24 include removing an electrical cable 14 from the cable guiding assembly 19 and opening mounting or locking provided by the mounting system 22. Thereafter, the cable guiding tail 18 can be turned into the transport position 24 and locked immovably therein. There are several different possibilities and mechanisms available for arranging the locking and release functions in the mounting system 22.

Figures 3 - 6 disclose a cable guiding assembly 19 and a rotating joint 20 by means of which the assembly 19 is mountable so that it can turn T freely around rotation axis 25. The rotating joint 20 may comprise a fastening plate 26 which can be mounted to a lower surface of a cable guiding tail by means of screws, for example. Then the rotation axis 25 is orientated in transverse direction relative to the cable guiding tail.

Figure 9 shows a cable guiding device 17 comprising a cable guiding tail 18, a cable guiding assembly 19, and a rotating joint 20. The cable guiding tail 17 may be an arm-like elongated structure having a desired length. The cable guiding assembly 19 and the rotating joint 20 are located at a distal end portion 18b of the cable guiding tail 17. An opposite end 18a can be mounted to the mining vehicle by means of fastening means. Figure 9 further shows the said force assembly 100A.

The method is disclosed in more detail as follows. The method comprises guiding the trailing electric cable 14 through the cable guiding device 17. The trailing electric cable 14 is guided through the force assembly 100. Further, the trailing electric cable 14 is guided through the cable guiding assembly 19. The method further comprises pulling the trailing electric cable 14 out from the cable reel assembly 16. The trailing electric cable 14 is pulled out by the force assembly 100 providing a force to the portion of the trailing electric cable 14 that is unwound from the cable reel assembly 16.

The method further comprises controlling speed of the trailing electric cable 14 traveling through the cable guiding device 17 relative to the speed of the trailing electric cable 14 locating on the cable reel assembly 16. The speed of the trailing electric cable 14 traveling through the cable guiding device 17 is controlled by adjusting the said force provided by the force assembly 100.

The method further comprises controlling speed of the trailing electric cable 14 on the cable reel assembly. The speed of the trailing electric cable 14 is controlled by the reel motor 16b of the reel assembly 16. The reel motor 16b is configured to partially prevent rotation of the reel 16a. In other words, the reel motor 16b is configured to partially allow rotation of the reel 16a.

The method further comprises allowing the cable guiding assembly 19 to turn in relation to the cable guiding tail 18 in response to movements of the mining vehicle 1.

The force assembly 100 of the figures may be used also for pulling the trailing electric cable 14 towards to the cable reel assembly 16 in a situation, where the electric cable is being reeled in back to the cable reel assembly 16.

The drawings and the related description are only intended to illustrate the idea of the invention. In its details, the invention may vary within the scope of the claims.

## Claims

1. A cable guiding device (17) for guiding a trailing electric cable (14) of an electrically powered mining vehicle (1), which electrically powered mining vehicle (1) comprises a cable reel assembly (16) for reeling in and/or out the trailing electric cable (14), the cable guiding device (17) comprising:
a cable guiding tail (18) which has an elongated arm configuration mountable to the electrically powered mining vehicle (1); and
a cable guiding assembly (19) mounted to the cable guiding tail (18) and comprising guide rollers (28) for guiding the trailing electric cable (14); **characterized in that** the cable guiding device (17) further comprises
a force assembly (100), being coupled to the cable guiding assembly (19) and/or the cable guiding tail (18), and configured to pull the trailing electric cable (14) out from the cable reel assembly (16) by providing a force to a portion of the trailing electric cable (14) that is unwound from the cable reel assembly (16).

2. The cable guiding device (17) as claimed in claim 1, **characterized in that** the cable guiding device (17), or the force assembly (100), comprises
at least one first rotatable element (110A) configured to be in contact to the trailing electric cable (14),
at least one second rotatable element (110B) configured to be in contact to the trailing electric cable (14), wherein the said at least one first rotatable element (110) and the said at least one second rotatable element (110) are arranged opposing sides of the trailing electric cable (14), and **in that** the force assembly (100) comprises
a motor (120A) coupled to the at least one first rotatable element (110A) and/or the at least one second rotatable element (110B), wherein the motor (120A) is configured to rotate the first rotatable element (110A) and/or the second rotatable element (110B) for providing the force to the trailing electric cable (14).

3. The cable guiding device (17) as claimed in claim 2, **characterized in that** the motor (120A) of the force assembly (100) is coupled to the at least one first rotatable element (110A), and **in that** the force assembly (100) further comprises
a second motor (120B) coupled to the at least one second rotatable element (110B), wherein the second motor (120B) is configured to rotate the second rotatable element (110B) for providing the force to the trailing electric cable (14).

4. The cable guiding device (17) as claimed in claim 2 or 3, **characterized in that** the force assembly (100) further comprises
an adjusting mechanism (130) configured to adjust a gap for the trailing electric cable (14) between the at least one first rotatable element (110A) and the at least one second rotatable element (110B).

5. The cable guiding device (17) as claimed in any one of the preceding claims, **characterized in that**
the force assembly (100) comprises a control unit (140) for controlling the force provided to the trailing electric cable (14).

6. The cable guiding device as claimed in any one of the preceding claims, **characterized in that** the cable guiding assembly (19) comprises:
a frame (27) arranged to provide support for the guide rollers (28);
two first side rollers (28a) and two second side rollers (28b) arranged on opposing sides of the frame (27), wherein the trailing electric cable (14) is arranged to travel between the two first side rollers (28a) and the two second side rollers (28b); and
two down rollers (28c) located adjacent lower ends of the first and second side rollers (28a, 28b) and being orientated in transverse direction in relation to the first and second side rollers (28a, 28b).

7. The cable guiding device as claimed in claim 6, **characterized in that** the force assembly (100) comprises
a first motor (120A) coupled to the at least one first side roller (28a), wherein the first motor (120A) is configured to rotate the first side roller (28a) for providing the force to the trailing electric cable (14),
a second motor (120B) coupled to the at least one second side roller (28b), wherein the second motor (120B) is configured to rotate the second side roller (28b) for providing the force to the trailing electric cable (14), and
an adjusting mechanism (130) configured to adjust a gap for the trailing electric cable (14) between the at least one first side roller (28a) and the at least one second side roller (28b).

8. The cable guiding device as claimed in any one of the preceding claims, **characterized in that**
the cable guiding device (17) further comprises a rotating joint (20) between the cable guiding assembly (19) and the cable guiding tail (18) whereby the cable guiding assembly (19) is turnable (T) in relation to the cable guiding tail (18).

9. A mining vehicle (1), comprising:
a movable carrier (2);
at least one mine work device (3) mounted on the carrier (2);
an electrical operating system (12) for powering the mining vehicle (1);
a cable reel assembly (16) for reeling in and out a trailing electric cable (14); **characterized in that** the mining vehicle (1) further comprises
at least one cable guiding device (17), as claimed in any one of the preceding claims, for handling the trailing electric cable (14).

10. The mining vehicle as claimed in claim 9, **characterized in that**
the cable guiding tail (18) is mounted to an upper part of a rear end part (15) of the mining vehicle (1) and has downwards slanted orientation.

11. The mining vehicle as claimed in claim 9 or 10, **characterized in that** the cable reel assembly (16) comprises
a reel (16a) for storing the trailing electric cable (14), and
a reel motor (16b) coupled to the reel (16a) and configured to reel in and/or out the trailing electric cable (14) .

12. A method of guiding a trailing electric cable (14) of an electrically powered mining vehicle (1) that moves on a route, wherein the method comprises
guiding the trailing electric cable (14) through the cable guiding device (17), and
pulling the trailing electric cable (14) out from the cable reel assembly (16), wherein the trailing electric cable (14) is pulled out by the force assembly (100) providing a force to the portion of the trailing electric cable (14) that is unwound from the cable reel assembly (16).

13. A method as claimed in claim 12, wherein the method further comprises
controlling speed of the trailing electric cable (14) traveling through the cable guiding device (17) relative to the speed of the trailing electric cable (14) locating on the cable reel assembly (16), which speed of the trailing electric cable (14) traveling through the cable guiding device (17) is controlled by adjusting the said force provided by the force assembly (100).

14. A method as claimed in claim 12 or 13, wherein the method further comprises
controlling speed of the trailing electric cable (14) on the cable reel assembly, which speed of the trailing electric cable (14) is controlled by a reel motor (16b) of the reel assembly (16).

15. A method as claimed in any one of the preceding claims 12-14, wherein the method comprises
allowing the cable guiding assembly (19) to turn in relation to the cable guiding tail (18) in response to movements of the mining vehicle (1).
